# EUROPEAN PATENT APPLICATION

(11) **EP 4 523 516 A1**
(43) Date of publication of application: **19.03.2025**
(21) Application number: 23803317.9
(22) Date of filing: 11.04.2023
(51) Int. Cl.: A01D 46/30, B25J 5/00, B25J 13/08, G05D 1/02

(54) **SELF-PROPELLED WORK ROBOT**

(30) Priority: 11.05.2022 JP 2022078208
(71) Applicant: DENSO CORPORATION, Kariya-city, Aichi 448-8661 (JP)
(72) Inventor: INADA, Seisho, Kariya-city, Aichi 4488661 (JP); NISHINO, Hideyuki, Kariya-city, Aichi 4488661 (JP); HASEGAWA, Takaomi, Kariya-city, Aichi 4488661 (JP); HANDA, Go, Kariya-city, Aichi 4488661 (JP); ARIHARA, Hiromu, Kariya-city, Aichi 4488661 (JP); ISHIKAWA, Hayato, Kariya-city, Aichi 4488661 (JP)
(74) Representative: Kuhnen & Wacker Patent- und Rechtsanwaltsbüro PartG mbB
(86) International application number: PCT/JP2023/014728
(87) International publication number: WO 2023/218835

(57) **Abstract**

A self-propelled work robot (100) includes an operation unit (102) configured to be operated in a plurality of operation modes, a robot main body (101) provided with the operation unit, a traveling unit (105) that causes the robot main body to travel, a target detection unit (110) configured to detect a predetermined target, and an operation mode switching unit (124) that switches an operation mode of the operation unit according to a state of the target detected by the target detection unit.

## Description

### CROSS REFERENCE TO RELATED APPLICATION

The present application is based on Japanese Patent Application No. 2022-078208 filed on May 11, 2022. The entire disclosures of all of the above applications are incorporated herein by reference.

### TECHNICAL FIELD

The present disclosure relates to a self-propelled work robot.

### BACKGROUND ART

In recent years, there has been studied a technique for performing work for crops, such as harvesting operations, with a self-propelled work robot in an agricultural field growing the crops, for example. For example, a self-propelled work robot disclosed in Patent Literature 1 as this type of self-propelled work robot includes a robot arm for performing work as an operation unit.

### PRIOR ART LITERATURE

### PATENT LITERATURE

PATENT LITERATURE 1: JP2021-101653A

### SUMMARY OF INVENTION

In this type of self-propelled work robot, it is considered that a robot arm that performs work is configured to be switchable between an operation permission mode in which operation is permitted and an operation restriction mode in which operation is restricted. Herein, for example, in the agricultural field, there are a work area set on an assumption that work is performed by the self-propelled work robot and a non-work area set on an assumption that work is not performed by the self-propelled work robot. In the non-work area, the self-propelled work robot may travel, and there may be a person. Therefore, in a state where the self-propelled work robot is present in the non-work area, it is assumable to prevent the robot arm from unintentionally operating and coming into contact with a person, by reliably switching the robot arm to the operation restriction mode, and thus to improve safety.

Therefore, the present disclosure provides a configuration capable of accurately switching an operation mode of an operation unit according to an area where the self-propelled work robot is present.

According to an aspect of the present disclosure, a self-propelled work robot comprises: an operation unit configured to operate in a plurality of operation modes; a robot main body provided with the operation unit; a traveling unit configured to cause the robot main body to travel; a target detection unit configured to detect a predetermined target; and an operation mode switching unit configured to switch among the operation modes of the operation unit according to a state of the target detected by the target detection unit.

According to a self-propelled work robot of the present disclosure, an operation mode of an operation unit can be switched in response to a state of a target detected by a target detection unit. Accordingly, for example, by providing the target in an area for which the operation mode of the operation unit is desired to be switched, the operation mode of the operation unit can be accurately switched according to an area where the self-propelled work robot is present.

### BRIEF DESCRIPTION OF THE DRAWINGS

The above object and other objects, features, and advantages of the present disclosure will be clarified by the following detailed description with reference to the accompanying drawings, in which:
FIG. 1 is a diagram schematically illustrating an example of a configuration of an agricultural field according to a first embodiment;
FIG. 2 is a diagram schematically illustrating an example of a configuration of a self-propelled work robot according to the first embodiment;
FIG. 3 is a diagram according to the first embodiment, schematically illustrating an example of a state where an obstacle detection area is switched to an out-of-lane pattern;
FIG. 4 is a diagram according to the first embodiment, schematically illustrating an example of a state where an obstacle detection area is switched to an in-lane pattern;
FIG. 5 is a perspective view schematically illustrating an example of a configuration of a hot-water pipe detection sensor according to the first embodiment;
FIG. 6 is a view according to the first embodiment, schematically illustrating an example of the hot-water pipe detection sensor in a non-detected state;
FIG. 7 is a view according to the first embodiment, schematically illustrating an example of the hot-water pipe detection sensor in a detected state;
FIG. 8 is a block diagram schematically illustrating an example of a configuration of a control device according to the first embodiment;
FIG. 9 is a diagram according to the first embodiment, illustrating an example of a correspondence between a detection state of sensors and a mode of each unit;
FIG. 10 is a diagram according to a second embodiment, schematically illustrating an example of a state where a hot-water pipe is not inclined; and
FIG. 11 is a diagram according to the second embodiment, schematically illustrating an example of a state where the hot-water pipe is inclined.

### DESCRIPTION OF EMBODIMENTS

Hereinafter, a plurality of embodiments of a self-propelled work robot of the present disclosure will be described with reference to the drawings. Substantially the same elements in the plurality of embodiments are denoted by the same reference numerals, and description thereof will be omitted.

### (First embodiment)

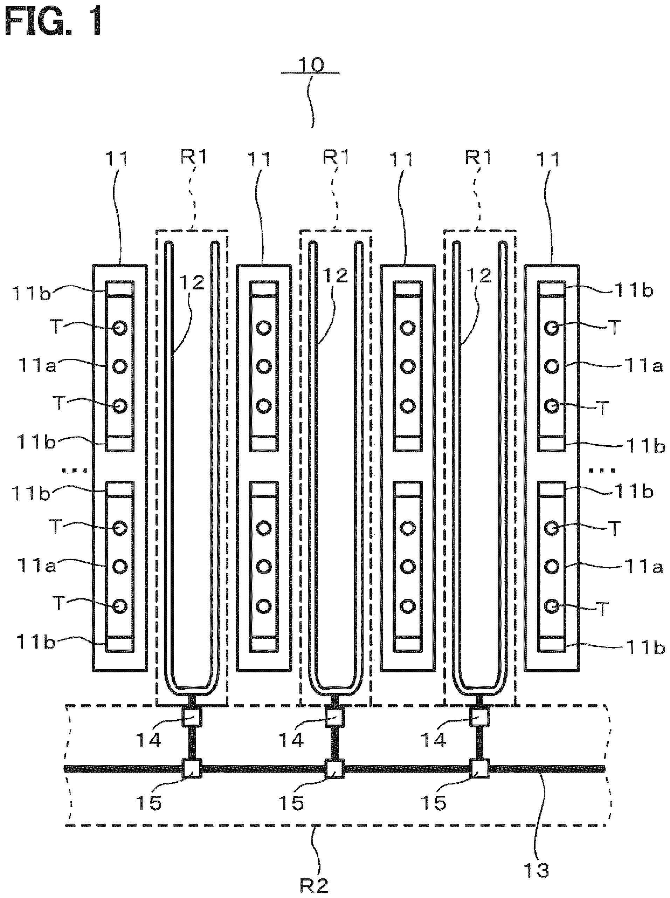

A self-propelled work robot 100 according to the present disclosure can be used for performing work such as a harvesting operation on a crop T in an agricultural field 10 exemplified in FIG. 1, for example. The agricultural field 10 may also be referred to as, for example, a plastic greenhouse, a plant factory or the like. In this case, a plurality of cultivation sections 11, a plurality of hot-water pipes 12, a plurality of trace lines 13, and the like are provided in the agricultural field 10.

Each of the cultivation sections 11 includes a plurality of cultivation facilities 11a. Each of the cultivation facilities 11a is a facility for the crop T to be harvested by the self-propelled work robot 100. Each of the cultivation facility 11a is supported by a support member 11b such as a pole for example, in a cultivation section 11. In one cultivation section 11, a plurality of cultivation facilities 11a is arranged in a straight line along a longitudinal direction of the cultivation section 11. For example, one cultivation section 11 extends in one direction over a predetermined distance such as about a dozen meters to a few dozen meters. In the agricultural field 10, the plurality of cultivation sections 11 is arranged in parallel to each other. The plurality of cultivation sections 11 is arranged at intervals. In this case, the intervals between the plurality of cultivation sections 11 are equal. The intervals between the plurality of cultivation sections 11 may be unequal intervals.

Each of the hot-water pipes 12 is provided between two adjacent cultivation sections 11. The hot-water pipes 12 is formed by bending a long tubular member into a so-called U shape, and extends along the cultivation sections 11. Hot water can flow into the hot-water pipes 12 from a hot-water supply facility (not illustrated). When the hot water flows through the hot-water pipes 12, temperature in the agricultural field 10, particularly, temperature in peripheral areas of the cultivation sections 11 can be warmed to an appropriate temperature. The hot-water pipes 12 are provided in the agricultural field 10 as an example of a predetermined target.

The trace lines 13 are installed, for example, by being attached, printed, or drawn on a floor surface of the agricultural field 10, and connects the plurality of hot-water pipes 12. In the agricultural field 10, areas where the hot-water pipes 12 are provided are defined as work areas R1. In the agricultural field 10, an area that is other than the work areas R1 and connecting the plurality of work areas R1, in this case, an area where the trace lines 13 are provided is defined as a non-work area R2. The non-work area R2 is included in a passage through which the self-propelled work robot 100 travels during a non-work time.

The work areas R1 are areas provided basically on an assumption that work is performed by the self-propelled work robot 100, and are areas provided on an assumption that there is no person such as a manager of the agricultural field 10 or a user of the self-propelled work robot 100, for example. That is, the work areas R1 can be basically defined as non-coexistence areas provided on an assumption that the self-propelled work robot 100 and a person do not coexist.

Meanwhile, the non-work area R2 is an area provided on an assumption that work is not performed by the self-propelled work robot 100, and is an area provided on an assumption that there is a person such as the manager of the agricultural field 10 or the user of the self-propelled work robot 100, for example. That is, the non-work area R2 can be basically defined as a coexistence area provided on an assumption that the self-propelled work robot 100 and a person coexist.

A plurality of markers 14 and 15 is provided in the agricultural field 10. In this case, the markers 14 and 15 are located and provided at boundary points between the work areas R1 and the non-work area R2 or at branch points of the trace lines 13. More specifically, in this case, in the non-work area R2, the markers 14 are provided at locations immediately in front of entrances to the work areas R1 near the boundary points between the work areas R1 and the non-work area R2. The markers 15 are located and provided at the branch points branching into the respective work areas R1 from the trace lines 13 linearly provided so as to intersect the plurality of work areas R1.

The markers 14 and 15 are installed, for example, by being attached, printed, or drawn on the floor surface of the agricultural field 10, and images of the markers 14 and 15 can be captured by a camera 104 included in the self-propelled work robot 100. The markers 14 and 15 can also include, for example, an information transmission medium capable of transmitting information in a non-contact manner by magnetism, radio waves, images, sound waves, or other methods. Specifically, the markers 14 and 15 can include, for example, a RFID, a two-dimensional code, a magnetic marker, or the like.

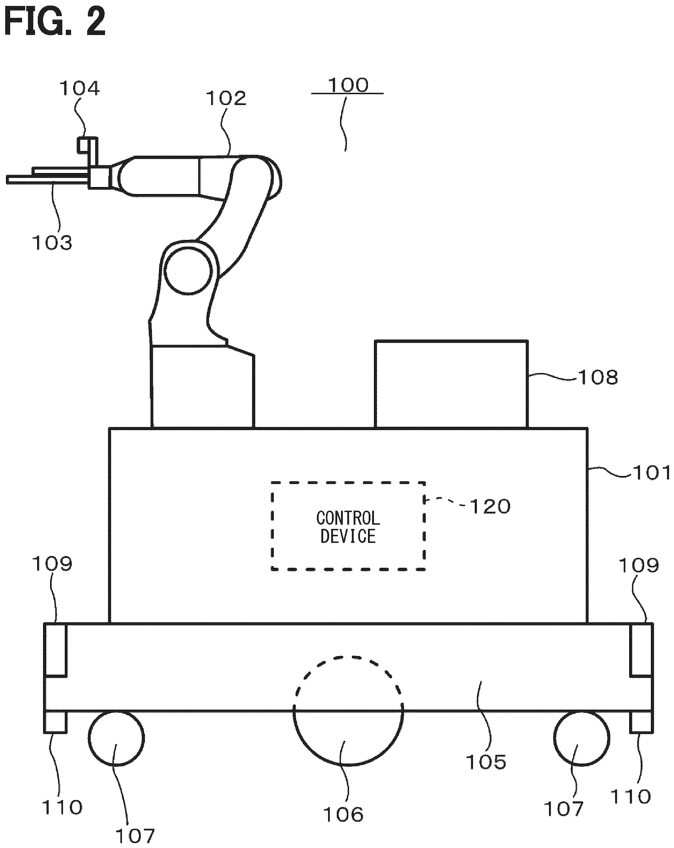

Next, an example of a configuration of the self-propelled work robot 100 will be described in detail. As exemplified in FIG. 2, the self-propelled work robot 100 includes a robot arm 102 on an upper portion of a robot main body 101 that constitutes a base portion of the self-propelled work robot 100. The robot arm 102 is an example of an operation unit. The robot arm 102 has a configuration in which a plurality of movable arms is combined, that is, a so-called multi-axis configuration. Therefore, a so-called six-axis robot arm, a four-axis robot arm, or the like can be applied as the robot arm 102.

The robot arm 102 includes a harvest tool 103 and a camera 104 at a tip end thereof. In this case, the harvest tool 103 is provided as an example of a work unit that performs a harvesting operation of the crops T as a predetermined operation. The robot arm 102 is configured as an operation unit capable of executing a harvesting operation, which is an example of agricultural work, by including such a harvest tool 103 for harvesting crops. The work unit that can be included in the robot arm 102 is not limited to the harvest tool 103, and may be, for example, a tool for performing agricultural work other than a harvesting operation or a tool for performing work other than agricultural work.

The camera 104 is an example of an imaging unit, and is configured to capture an image of, for example, the trace lines 13, the markers 14 and 15, and the like provided in the agricultural field 10. The self-propelled work robot 100 can autonomously travel while determining the current location of the self-propelled work robot 100 on the basis of the trace lines 13, the markers 14 and 15, and the like of which images captured by the camera 104.

The robot arm 102 is configured to be operated in a plurality of operation modes. In this case, the robot arm 102 is configured to be switchable between at least an operation permission mode in which operation is permitted and an operation restriction mode in which the operation is restricted.

The operation permission mode is an operation mode in which the robot arm 102 is permitted to perform the harvest operation of the crop T with the harvest tool 103 or an imaging operation with the camera 104, while moving the plurality of movable arms.

Meanwhile, the operation restriction mode is an operation mode in which the robot arm 102 is restricted to perform the harvest operation of the crop T with the harvest tool 103 or an imaging operation with the camera 104, while moving the plurality of movable arms. In this case, restriction by the operation restriction mode is on an assumption that operation of the robot arm 102 is restricted or stopped. However, for example, if sufficient safety is ensured, the operation restriction mode may be set such that the operation of the robot arm 102 is slightly permitted.

The self-propelled work robot 100 includes a traveling unit 105 below the robot main body 101. The traveling unit 105 includes a pair of driving wheels 106 and a plurality of driven wheels 107. The driving wheels 106 are an example of wheels. Although not illustrated in detail, the driving wheels 106 are configured to be rotated by a drive source, such as a motor, via a speed reducer, for example. The traveling unit 105 mainly rotates the driving wheels 106 to cause the robot main body 101 and eventually the entire self-propelled work robot 100 to travel. The driven wheels 107 rotate as the robot main body 101 travels with the driving wheels 106, and support and stabilize the traveling of the robot main body 101 and eventually the traveling of the entire self-propelled work robot 100.

The robot main body 101 has a long, substantially rectangular shape as a whole, and the traveling unit 105 causes the robot main body 101 and eventually the entire self-propelled work robot 100 to travel along a longitudinal direction of the robot main body 101. That is, in this case, a traveling direction of the robot main body 101 and eventually the entire self-propelled work robot 100 is a direction along the longitudinal direction of the robot main body 101.

In the work area R1, the robot main body 101 of the self-propelled work robot 100 travels with the traveling unit 105, on the hot-water pipes 12. In the work area R1, the self-propelled work robot 100 travels such that the longitudinal direction of the robot main body 101 is along an extending direction of the hot-water pipe 12. Therefore, in the agricultural field 10, the hot-water pipes 12 extend along the direction in which the robot main body 101 travels with the traveling unit 105.

The self-propelled work robot 100 includes a disinfection unit 108. The disinfection unit 108 is an example of a disinfection unit, and is configured to spray a disinfectant solution from a nozzle (not illustrated), in a disinfection box having an open upper surface. The disinfection unit 108 is configured to disinfect the harvest tool 103 by spraying the disinfectant solution in a state where the robot arm 102 has moved the harvest tool 103 at the tip end thereof into the disinfection box of the disinfection unit 108.

The self-propelled work robot 100 includes a plurality of, two in this case, obstacle detection sensors 109. The obstacle detection sensors 109 are arranged in a distributed manner at a front portion and rear portion of the robot main body 101 in the traveling direction. The obstacle detection sensors 109 are provided as an example of an obstacle detection unit for detecting an obstacle present around the robot main body 101. The obstacle detection sensor 109 includes, for example, a laser sensor, an ultrasonic sensor, or the like that detects an obstacle present in the surroundings. As the obstacle detected by the obstacle detection sensor 109, for example, a cultivation facility 11a, a support member 11b, a person, various facilities, and the like present in the agricultural field 10 are assumed. The obstacle detection sensor 109 desirably includes a sensor that has acquired a predetermined safety certification.

The self-propelled work robot 100 includes a plurality of, two in this case, hot-water pipe detection sensors 110. The hot-water pipe detection sensors 110 are also arranged in a distributed manner at the front portion and rear portion of the robot main body 101 in the traveling direction. The hot-water pipe detection sensors 110 are provided as an example of a target detection unit, and are configured to detect, in this case, the hot-water pipes 12 as an example of the target provided in the agricultural field 10. Configurations, functions, and the like of the hot-water pipe detection sensor 110 will be described in detail later. The hot-water pipe detection sensor 110 desirably includes a sensor that has acquired a predetermined safety certification.

The self-propelled work robot 100 includes a control device 120. The control device 120 mainly includes a microcomputer for example, and controls overall operation of the self-propelled work robot 100 on the basis of a control program, setting data, and the like.

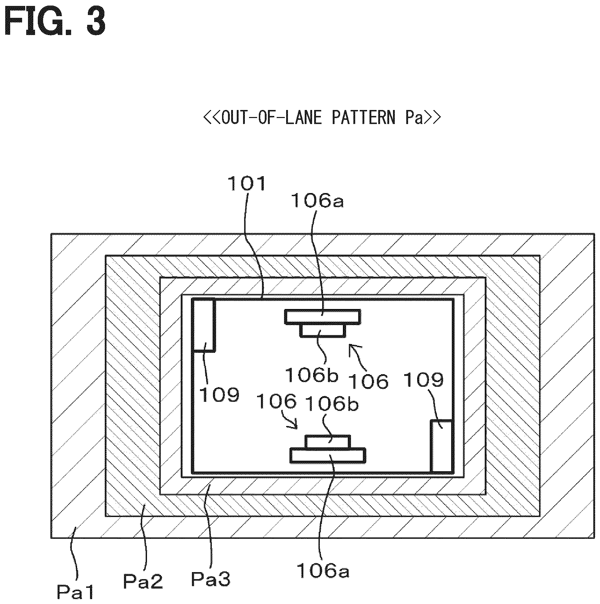

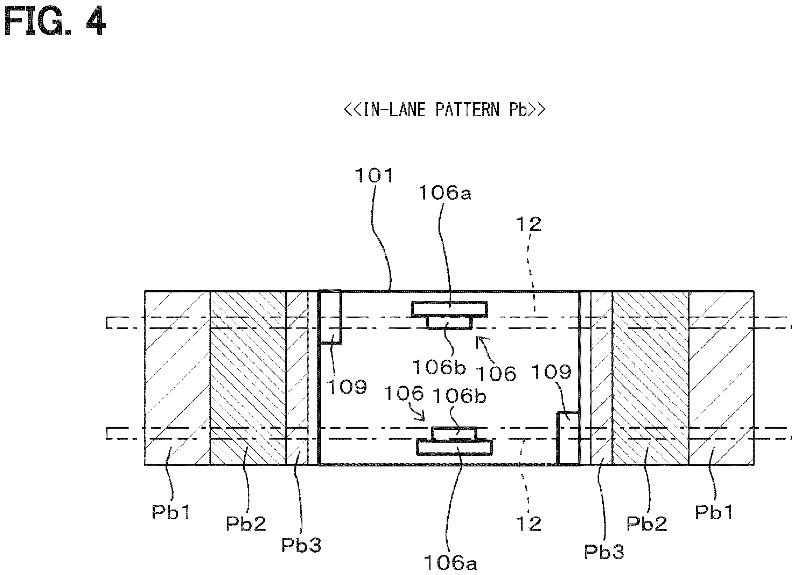

As exemplified in FIGS. 3 and 4, one obstacle detection sensor 109 of the two obstacle detection sensors 109 is disposed on one end side in a shorter direction of the robot main body 101, at the front portion of the robot main body 101. Another obstacle detection sensor 109 of the two obstacle detection sensors 109 is disposed on another end side in the shorter direction of the robot main body 101, at the rear portion of the robot main body 101.

Each of the driving wheels 106 included in the traveling unit 105 has a configuration in which a large wheel part 106a and the small wheel part 106b are coaxially combined. The large wheel part 106a is a large-diameter wheel that constitutes a main body of the driving wheel 106. Meanwhile, the small wheel part 106b is a wheel having a smaller diameter than the diameter of the large wheel part 106a. The large wheel part 106a and the small wheel part 106b have a common rotary shaft. Therefore, the large wheel part 106a and the small wheel part 106b rotate integrally.

When traveling in an area other than the work areas R1 in the agricultural field 10, the self-propelled work robot 100 travels with the large wheel parts 106a in contact with the floor surface of the agricultural field 10. At this time, the small wheel parts 106b are not in contact with but separated from the floor surface of the agricultural field 10. Therefore, when traveling in an area other than the work areas R1 in the agricultural field 10, the self-propelled work robot 100 travels mainly with rotation of the large wheel parts 106a.

However, when traveling in the work areas R1 in the agricultural field 10, the self-propelled work robot 100 travels on the hot-water pipes 12 as described above. At this time, as exemplified in FIG. 4, the self-propelled work robot 100 travels with the small wheel parts 106b in contact with an upper surface of the hot-water pipe 12. At this time, the large wheel parts 106a are not in contact with but are separated from the floor surface of the agricultural field 10. Therefore, when traveling in the work areas R1 in the agricultural field 10, the self-propelled work robot 100 travels mainly with rotation of the small wheel parts 106b.

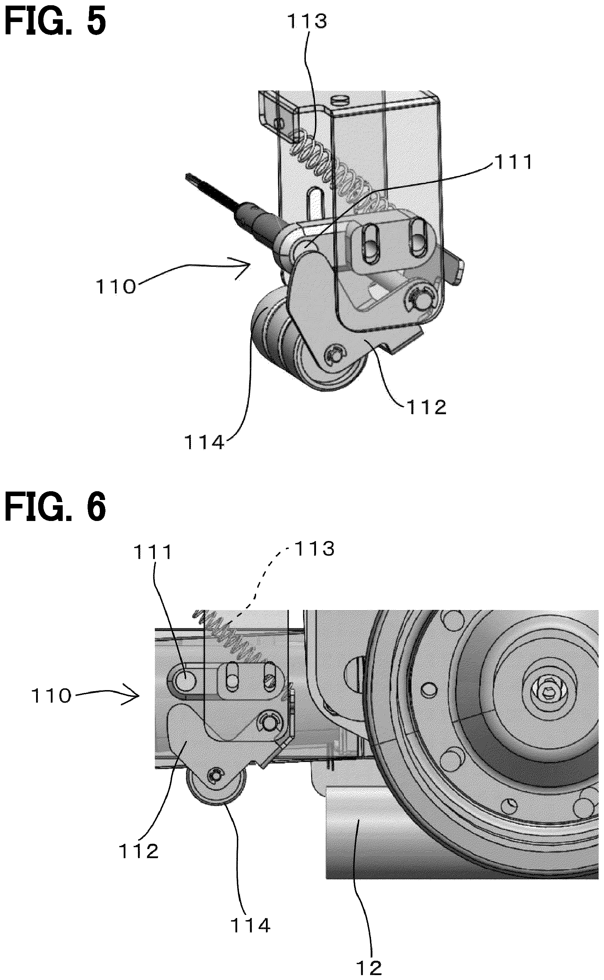

Next, an example of a configuration of the hot-water pipe detection sensor 110 will be described in more detail. As exemplified in FIG. 5, the hot-water pipe detection sensor 110 includes a non-contact switch 111 and shielding plate 112. The non-contact switch 111 is configured to switch between an on state and an off state according to, for example, an optical or magnetic state change. The shielding plate 112 is provided to be pivotable in an up-down direction on a side of the non-contact switch 111.

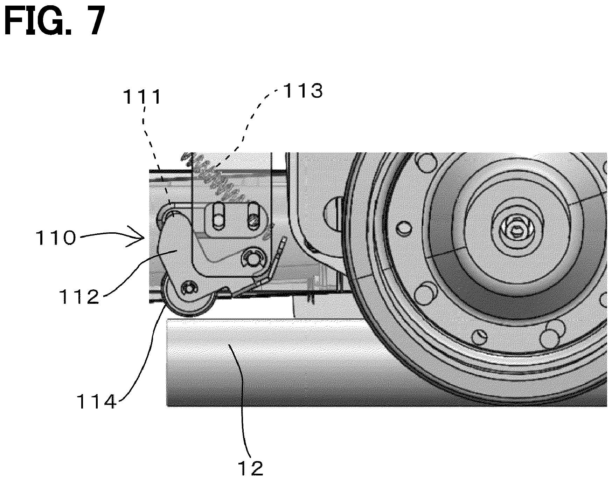

In this case, the shielding plate 112 is pivotable between a non-detection position where the shielding plate 112 does not cover but exposes the non-contact switch 111 as exemplified in FIG. 6, and a detection position where the shielding plate 112 covers the non-contact switch 111 as exemplified in FIG. 7.

The shielding plate 112 is biased to pivot from a detection position side as exemplified in FIG. 7 to a non-detection position side as exemplified in FIG. 6, by a biasing member 113 including, for example, a compression coil spring or the like. A support wheel 114 is rotatably provided at a lower end of the shielding plate 112.

As exemplified in FIG. 6, in a state where the self-propelled work robot 100 is not present on the hot-water pipe 12, the shielding plate 112 pivots to the non-detection position by receiving biasing force of the biasing member 113. Accordingly, the non-contact switch 111 is brought into a non-detected state where the hot-water pipe 12 is not detected. Meanwhile, as exemplified in FIG. 7, in a state where the self-propelled work robot 100 is present on the hot-water pipes 12, the shielding plate 112 is pushed upward by the hot-water pipe 12 via the support wheel 114, and pivots to the detection position while resisting the biasing force of the biasing member 113. Accordingly, the non-contact switch 111 is brought into a detected state where the hot-water pipe 12 is detected.

With such a configuration, the hot-water pipe detection sensors 110 are configured to detect the hot-water pipes 12 as an example of the target, in response to the non-contact switches 111 switching to the detected state or the non-detected state.

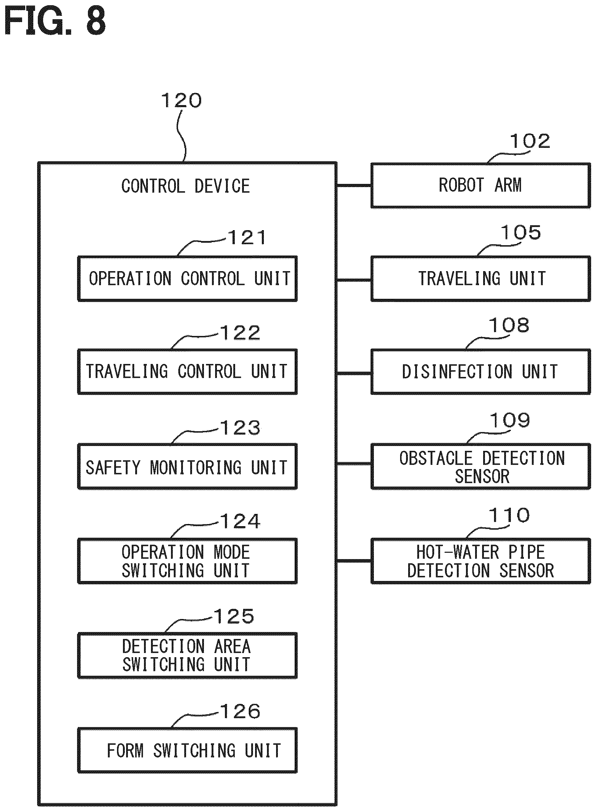

Next, an example of a configuration of a control system of the self-propelled work robot 100 will be described in more detail. As exemplified in FIG. 8, the control device 120 executes a control program to virtually implement, by using software, an operation control unit 121, a traveling control unit 122, a safety monitoring unit 123, an operation mode switching unit 124, a detection area switching unit 125, and a form switching unit 126. These processing units may include hardware, or may include a combination of software and hardware.

The operation control unit 121 is configured to control overall operation of the self-propelled work robot 100. The operation control unit 121 controls overall operation of the entire robot arm 102 while recognizing orientation, speed, position, and the like of each unit of the robot arm 102. The operation control unit 121 controls overall harvest operation by the harvest tool 103. The operation control unit 121 controls overall imaging operation by the camera 104.

More specifically, the operation control unit 121 analyzes an image captured by the camera 104, recognizes a position, orientation, and the like of the crop T, which is a work object, and specifies a cutting point. The operation control unit 121 operates the robot arm 102 so that the harvest tool 103 reaches a specified cutting point. The operation control unit 121 operates the harvest tool 103 at the specified cutting point. Accordingly, the operation control unit 121 is configured to harvest the crop T, which is the work object, with the robot arm 102 on which the harvest tool 103 and the camera 104 are mounted. The self-propelled work robot 100 may include a collection box that contains the crop T harvested by the robot arm 102.

The traveling control unit 122 is configured to control traveling of the robot main body 101 and eventually the entire self-propelled work robot 100, with the traveling unit 105. The traveling control unit 122 is connected to, for example, an encoder, an angle sensor, a rotational speed sensor that measures a rotational speed of the motor, and the like. The traveling unit 105 is configured to switch a rotational speed of the driving wheels 106, which move the robot main body 101 and eventually the entire self-propelled work robot 100, under control of the traveling control unit 122, according to states of the hot-water pipe 12 detected by the hot-water pipe detection sensors 110. In other words, the traveling unit 105 is configured to switch a moving speed of the robot main body 101 and eventually the entire self-propelled work robot 100.

More specifically, as described above, when traveling in an area other than the work areas R1 in the agricultural field 10, the self-propelled work robot 100 travels mainly with rotation of the large wheel parts 106a. Meanwhile, when traveling in the work areas R1 in the agricultural field 10, the self-propelled work robot 100 travels mainly with rotation of the small wheel parts 106b. Therefore, if the driving wheels 106 are rotated at the same rotational speed regardless of an area where the self-propelled work robot 100 travels, the moving speed of the self-propelled work robot 100 when traveling in an area other than the work areas R1 is relatively high, and the moving speed of the self-propelled work robot 100 when traveling in the work areas R1 is relatively low.

Therefore, for example, in a case where the self-propelled work robot 100 is desired to travel in the work areas R1 at a moving speed equivalent to a moving speed in an area other than the work areas R1, the traveling control unit 122 may increase the rotational speed of the driving wheels 106.

The traveling control unit 122 is configured to switch the traveling unit 105 at least to a harvest time mode, a passage traveling time mode, and a transition time mode.

The harvest time mode is a traveling mode in which the self-propelled work robot 100 is assumed to travel in the work areas R1, and in which the self-propelled work robot 100 can travel at a predetermined high speed. The predetermined high speed can be appropriately changed and set within a speed range in which sufficient safety is ensured.

The passage traveling time mode is a traveling mode in which the self-propelled work robot 100 is assumed to travel in an area other than the work areas R1, and in which the self-propelled work robot 100 can travel at a predetermined low speed or stop. The predetermined low speed can be appropriately changed and set within a speed range in which sufficient safety is ensured and within a speed range lower than the predetermined high speed described above.

The transition time mode is a traveling mode provided assuming a case where the self-propelled work robot 100 is moved from outside of the work area R1 to inside of the work area R1 and a case where the self-propelled work robot 100 is moved from the inside of the work area R1 to the outside of the work area R1, in which the self-propelled work robot 100 can travel at the predetermined low speed. The predetermined low speed in the transition time mode is assumed to be further lower than the predetermined low speed in the time passage traveling time mode. However, the predetermined low speed in the transition time mode may be a speed equivalent to the predetermined low speed in the passage traveling time mode, or may be a speed slightly higher than the predetermined low speed in the passage traveling time mode.

The safety monitoring unit 123 is configured to monitor at least whether behaviors of the robot arm 102 and the traveling unit 105 are in a safe state. The safety monitoring unit 123 is configured to monitor whether a behavior of the entire self-propelled work robot 100 is in a safe state. The safety monitoring unit 123 functions as a control unit that controls behaviors of the robot arm 102, the traveling unit 105, and the entire self-propelled work robot 100. As the safe state, an appropriate state can be set on an assumption that the self-propelled work robot 100 does not harm at least a person. The safety monitoring unit 123 desirably includes a control unit that has acquired a predetermined safety certification.

The operation mode switching unit 124 is configured to switch the operation mode of the robot arm 102, according to states of the hot-water pipe 12 detected by the hot-water pipe detection sensors 110. The operation mode switching unit 124 is configured to switch the operation mode of the robot arm 102 from the operation restriction mode to the operation permission mode in a case where the hot-water pipe detection sensors 110 have detected the hot-water pipe 12. The operation mode switching unit 124 is configured to switch the operation mode of the robot arm 102 from the operation permission mode to the operation restriction mode in a case where the hot-water pipe detection sensors 110 have not detected the hot-water pipe 12.

The detection area switching unit 125 is configured to switch an area in which the obstacle detection sensors 109 detects an obstacle. In this case, the detection area switching unit 125 is configured to switch the obstacle detection area, according to states of the hot-water pipe 12 detected by the hot-water pipe detection sensors 110.

More specifically, in a case where the hot-water pipe 12 is not detected by the hot-water pipe detection sensors 110, the detection area switching unit 125 switches the area in which the obstacle detection sensors 109 detect an obstacle to an out-of-lane pattern Pa as exemplified in FIG. 3. The out-of-lane pattern Pa can also be defined as a non-work time pattern in which the robot arm 102 is assumed not to perform work.

In the out-of-lane pattern Pa, a plurality of detection areas, in this case, a first deceleration area Pa1, a second deceleration area Pa2, and a stop area Pa3 is formed. The first deceleration area Pa1, the second deceleration area Pa2, and the stop area Pa3 are all rectangular frame-shaped detection areas centered on the self-propelled work robot 100. The first deceleration area Pa1 is provided on outside of the second deceleration area Pa2, the second deceleration area Pa2 is provided on outside of the stop area Pa3, and the stop area Pa3 is provided on outside of the self-propelled work robot 100. The out-of-lane pattern Pa is a detection area pattern covering an entire periphery of the self-propelled work robot 100, including front, rear, left, and right sides of the self-propelled work robot 100.

In a case where the obstacle detection sensors 109 have detected that there is an obstacle in the first deceleration area Pa1, the traveling control unit 122 decelerates the moving speed of the self-propelled work robot 100 to a first speed for non-work time. The first speed for non-work time can be appropriately changed and set within a speed range lower than a speed for non-work time set as the moving speed of the self-propelled work robot 100 in an area other than the work areas R1. The speed for non-work time can be appropriately changed and set within a speed range in which sufficient safety is ensured when the self-propelled work robot 100 travels in an area other than the work areas R1.

In a case where the obstacle detection sensors 109 have detected that there is an obstacle in a second deceleration area Pa2, the traveling control unit 122 decelerates the moving speed of the self-propelled work robot 100 to a second speed for non-work time. The second speed for non-work time can be appropriately changed and set within a speed range lower than the first speed for non-work time.

In a case where the obstacle detection sensors 109 have detected that there is an obstacle in the stop area Pa3, the traveling control unit 122 stops the self-propelled work robot 100 from traveling.

Meanwhile, in a case where a hot-water pipe 12 is detected by the hot-water pipe detection sensors 110, the detection area switching unit 125 switches the area in which the obstacle detection sensors 109 detect an obstacle to an in-lane pattern Pb as exemplified in FIG. 4. The in-lane pattern Pb can also be defined as a work time pattern in which the robot arm 102 is assumed to perform work.

In the in-lane pattern Pb, a plurality of detection areas, in this case, a first deceleration area Pb1, a second deceleration area Pb2, and a stop area Pb3 is formed. The first deceleration area Pb1, the second deceleration area Pb2, and the stop area Pb3 are all long rectangular detection areas at a front and rear of the self-propelled work robot 100, extending along a shorter direction of the self-propelled work robot 100. The first deceleration area Pb1 is provided outside the second deceleration area Pb2, the second deceleration area Pb2 is provided outside the stop area Pb3, and the stop area Pb3 is provided outside the self-propelled work robot 100. The in-lane pattern Pb is a detection area pattern that includes the front and rear sides of the self-propelled work robot 100 and does not include the left and right sides of the self-propelled work robot 100. That is, the in-lane pattern Pb is a detection area pattern that covers an area along the traveling direction of the self-propelled work robot 100 in the work area R1.

In a case where the obstacle detection sensors 109 have detected that there is an obstacle in the first deceleration area Pb1, the traveling control unit 122 decelerates the moving speed of the self-propelled work robot 100 to a first speed for work time. The first speed for work time can be appropriately changed and set within a speed range lower than a speed for work time set as the moving speed of the self-propelled work robot 100 in the work areas R1. The speed for work time can be appropriately changed and set within a speed range in which sufficient safety is ensured when the self-propelled work robot 100 travels in the work areas R1.

In a case where the obstacle detection sensors 109 have detected that there is an obstacle in the second deceleration area Pb2, the traveling control unit 122 decelerates the moving speed of the self-propelled work robot 100 to a second speed for work time. The second speed for work time can be appropriately changed and set within a speed range lower than the first speed for work time.

In a case where the obstacle detection sensors 109 have detected that there is an obstacle in the stop area Pb3, the traveling control unit 122 stops the self-propelled work robot 100 from traveling.

The speed for work time is assumed to be a speed lower than the speed for non-work time, the first speed for work time is assumed to be a speed lower than the first speed for non-work time, and the second speed for work time is assumed to be a speed lower than the second speed for non-work time.

The form switching unit 126 is configured to switch a form of the robot arm 102 according to states of the hot-water pipe 12 detected by the hot-water pipe detection sensors 110. In this case, the robot arm 102 is configured to be switchable between a detection time form set as a form to be taken or form recommended in a case where the hot-water pipe detection sensors 110 have detected the hot-water pipe 12, and a non-detection time form set as a form to be taken or form recommended in a case where the hot-water pipe detection sensors 110 have not detected the hot-water pipe 12.

The non-detection time form may be, for example, a form in which the robot arm 102 has moved the harvest tool 103 at the tip end thereof into the disinfection unit 108, a form in which the robot arm 102 has moved the camera 104 at the tip end thereof to a position where an image of a predetermined imaging target can be captured, or another appropriate form. That is, various forms can be applied as the non-detection time form, as long as the robot arm 102 does not directly come into contact with a person or the like present around the self-propelled work robot 100.

The detection time form may be, for example, a form in which the robot arm 102 is immediately operable, in other words, a form in which the robot arm 102 is in a standby state, a form in which the robot arm 102 has moved the harvest tool 103 at the tip end thereof to the outside of the disinfection unit 108, or another appropriate form different from the above-described non-detection time forms.

The form switching unit 126 is configured to switch the form of the robot arm 102 from the detection time form to the non-detection time form in a case where the hot-water pipe detection sensors 110 have not detected the hot-water pipe 12 and the robot arm 102 is switched to the detection time form.

In a case where the hot-water pipe detection sensors 110 have not detected the hot-water pipe 12 and the robot arm 102 is switched to the detection time form, the form switching unit 126 causes the robot main body 101 and eventually the entire self-propelled work robot 100 to travel with the traveling unit 105 until the hot-water pipe detection sensors 110 are ready to detect the hot-water pipe 12, while maintaining the robot arm 102 in the form. The form switching unit 126 is configured to switch the form of the robot arm 102 from the detection time form to the non-detection time form on condition that the hot-water pipe detection sensors 110 are ready to detect the hot-water pipe 12, in other words, on condition that the self-propelled work robot 100 has moved into the work area R1.

That is, in a case where the hot-water pipe detection sensors 110 have not detected the hot-water pipe 12, it is highly possible that the self-propelled work robot 100 is present in an area other than the work areas R1. If the robot arm 102 is switched from the detection time form to the non-detection time form in a state where the self-propelled work robot 100 is present in an area other than the work areas R1, the robot arm 102 may come into contact with a person or an obstacle in the middle of the transformation.

Therefore, in a case where the hot-water pipe detection sensors 110 have not detected the hot-water pipe 12 and the robot arm 102 is switched to the detection time form, the form of the robot arm 102 may be switched from the detection time form to the non-detection time form after the self-propelled work robot 100 in that state is moved into the work area R1. That is, the transformation of the robot arm 102 from the detection time form to the non-detection time form may be performed in the work area R1. Accordingly, it is possible to prevent the robot arm 102 from coming into contact with a person or an obstacle in the middle of the transformation.

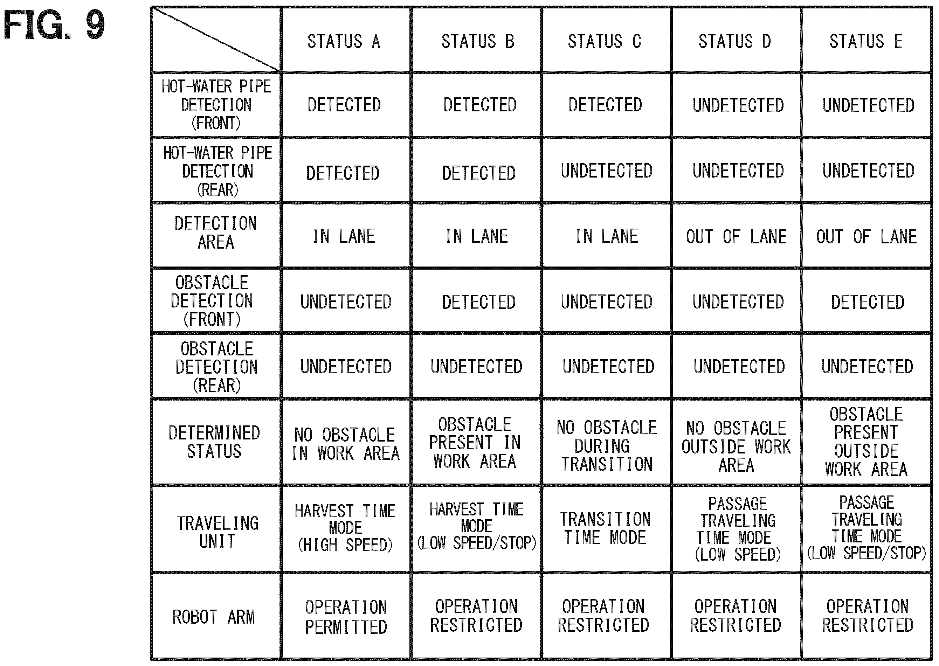

FIG. 9 illustrates an example of a correspondence between detection states of the hot-water pipe detection sensors 110 and obstacle detection sensors 109, and modes of the respective units and the like.

For example, according to a status pattern A, the hot-water pipe detection sensor 110 on the front side indicates the detected state, and the hot-water pipe detection sensor 110 on the rear side indicates the detected state. In this case, because both the two front and rear hot-water pipe detection sensors 110 of the self-propelled work robot 100 indicate the detected state, it can be determined that the self-propelled work robot 100 is present in the work area R1. Therefore, the control device 120 switches the area in which the obstacle detection sensors 109 detect an obstacle to the in-lane pattern Pb.

In a state where the area in which the obstacle detection sensors 109 detect an obstacle is switched to the in-lane pattern Pb, the obstacle detection sensor 109 on the front side indicates an undetected state, and the obstacle detection sensor 109 on the rear side indicates the undetected state.

As described above, the control device 120 determines that the self-propelled work robot 100 is present in the work area R1, and there is no obstacle around the self-propelled work robot 100, in this case, in front of and behind the self-propelled work robot 100.

The control device 120 switches the traveling mode of the traveling unit 105 to the harvest time mode to enable traveling at the predetermined high speed. The control device 120 switches the operation mode of the robot arm 102 to the operation permission mode to allow operation by the robot arm 102. Accordingly, the self-propelled work robot 100 can perform the harvesting operation with the robot arm 102, in the work area R1.

For example, according to a status pattern B, in a state where the area in which the obstacle detection sensors 109 detect an obstacle is switched to the in-lane pattern Pb, the obstacle detection sensor 109 on the front side indicates the detected state, and the obstacle detection sensor 109 on the rear side indicates the undetected state.

Therefore, the control device 120 determines that the self-propelled work robot 100 is present in the work area R1, and there is an obstacle around the self-propelled work robot 100, in this case, in front of the self-propelled work robot 100.

The control device 120 switches the traveling mode of the traveling unit 105 to the harvest time mode to enable traveling at the predetermined high speed. However, it is detected that there is an obstacle in front of the self-propelled work robot 100. Therefore, while switching the traveling mode of the traveling unit 105 to the harvest time mode, the control device 120, adjusts the moving speed of the self-propelled work robot 100 to the predetermined low speed, and, in some cases, stops the self-propelled work robot 100 from traveling.

The control device 120 switches the operation mode of the robot arm 102 to the operation restriction mode to restrict operation by the robot arm 102. Accordingly, it is possible to prevent the robot arm 102 from operating and coming into contact with an obstacle. At this time, the control device 120 can reduce operation speed of the robot arm 102 or stop the operation of the robot arm 102, for example. The control device 120 may perform control to slow down the operation speed of the robot arm 102 or temporarily stop the operation of the robot arm 102, for example, while setting the operation mode of the robot arm 102 to the operation permission mode.

For example, according to a status pattern C, the hot-water pipe detection sensor 110 on the front side indicates the detected state, and the hot-water pipe detection sensor 110 on the rear side indicates the undetected state. In this case, one of the two front and rear hot-water pipe detection sensors 110 of the self-propelled work robot 100 indicates the undetected state. Therefore, it can be determined that the self-propelled work robot 100 is in the middle of moving from outside of the work area R1 to inside of the work area R1, or in the middle of moving from the inside of the work area R1 to the outside of the work area R1.

In this case, it is estimated that at least a part of the self-propelled work robot 100 is present in the work area R1. Therefore, the control device 120 switches the area in which the obstacle detection sensors 109 detect an obstacle to the in-lane pattern Pb. That is, the control device 120 is configured to switch the area in which the obstacle detection sensors 109 detect an obstacle to the in-lane pattern Pb unless the entire self-propelled work robot 100 moves out of the work area R1, in other words, as long as a part of the self-propelled work robot 100 remains in the work area R1. The control device 120 may switch the area in which the obstacle detection sensors 109 detect an obstacle to the out-of-lane pattern Pa, in a case where at least a part of the obstacle detection area has moved to the outside of the work area R1.

In a state where the area in which the obstacle detection sensors 109 detect an obstacle is switched to the in-lane pattern Pb, the obstacle detection sensor 109 on the front side indicates an undetected state, and the obstacle detection sensor 109 on the rear side indicates the undetected state.

As described above, the control device 120 determines that the self-propelled work robot 100 is in the middle of moving from outside of the work area R1 to inside of the work area R1, or in the middle of moving from the inside of the work area R1 to the outside of the work area R1. The control device 120 determines that there is no obstacle around the self-propelled work robot 100, in this case, in front of and behind the self-propelled work robot 100.

The control device 120 switches the traveling mode of the traveling unit 105 to the transition time mode to enable traveling at the predetermined low speed. The control device 120 switches the operation mode of the robot arm 102 to the operation restriction mode to restrict operation by the robot arm 102. Accordingly, the self-propelled work robot 100 can move from the outside of the work area R1 to the inside of the work area R1 or from the inside of the work area R1 to the outside of the work area R1 in a state where the operation of the robot arm 102 is restricted. At this time, for example, the control device 120 may maintain a state where the operation of the robot arm 102 is stopped.

Although detailed description is omitted, even in a case where the hot-water pipe detection sensor 110 on the front side indicates the undetected state and the hot-water pipe detection sensor 110 on the rear side indicates the detected state, it is estimated that the self-propelled work robot 100 is in the middle of moving from the outside of the work area R1 to the inside of the work area R1, or in the middle of moving from the inside of the work area R1 to the outside of the work area R1. Therefore, also in this case, the control device 120 may perform control similar to control for the status pattern C described above.

For example, according to a status pattern D, the hot-water pipe detection sensor 110 on the front side indicates the undetected state, and the hot-water pipe detection sensor 110 on the rear side indicates the undetected state. In this case, both the two front and rear hot-water pipe detection sensors 110 of the self-propelled work robot 100 indicate the undetected state. Therefore, it can be determined that the self-propelled work robot 100 is present in an area other than the work areas R1. Therefore, the control device 120 switches the area in which the obstacle detection sensors 109 detect an obstacle to the out-of-lane pattern Pa.

In a state where the area in which the obstacle detection sensors 109 detect an obstacle is switched to the out-of-lane pattern Pa, the obstacle detection sensor 109 on the front side indicates the undetected state, and the obstacle detection sensor 109 on the rear side indicates the undetected state.

As described above, the control device 120 determines that the self-propelled work robot 100 is present in an area other than the work areas R1, which is on a passage in the agricultural field 10 for example, and there is no obstacle around the self-propelled work robot 100, in this case, in front of and behind the self-propelled work robot 100 in the traveling direction.

The control device 120 switches the traveling mode of the traveling unit 105 to the passage traveling time mode to enable traveling at the predetermined low speed. The control device 120 switches the operation mode of the robot arm 102 to the operation restriction mode to restrict operation by the robot arm 102. Accordingly, the self-propelled work robot 100 can travel in an area other than the work areas R1 in a state where the operation of the robot arm 102 is restricted. At this time, for example, the control device 120 may maintain a state where the operation of the robot arm 102 is stopped.

For example, according to a status pattern E, in a state where the area in which the obstacle detection sensors 109 detect an obstacle is switched to the out-of-lane pattern Pa, the obstacle detection sensor 109 on the front side indicates the detected state, and the obstacle detection sensor 109 on the rear side indicates the undetected state.

Therefore, the control device 120 determines that the self-propelled work robot 100 is present in an area other than the work areas R1, which is on a passage in the agricultural field 10 for example, and there is an obstacle around the self-propelled work robot 100, in this case, in front of the self-propelled work robot 100 in the traveling direction.

The control device 120 switches the traveling mode of the traveling unit 105 to the passage traveling time mode to enable traveling at the predetermined low speed. However, it is detected that there is an obstacle in front of the self-propelled work robot 100. Therefore, while switching the traveling mode of the traveling unit 105 to the passage traveling time mode, the control device 120 stops the self-propelled work robot 100 from traveling in some cases.

The control device 120 switches the operation mode of the robot arm 102 to the operation restriction mode to restrict operation by the robot arm 102. Accordingly, it is possible to prevent the robot arm 102 from operating and coming into contact with an obstacle. At this time, for example, the control device 120 can maintain a state where the operation of the robot arm 102 is stopped.

The self-propelled work robot 100 exemplified above includes the robot arm 102 configured to be operated in a plurality of operation modes, the robot main body 101 provided with the robot arm 102, the traveling unit 105 that causes the robot main body 101 to travel, the hot-water pipe detection sensors 110 configured to detect the hot-water pipes 12, and the operation mode switching unit 124 that switches the operation mode of the robot arm 102 according to states of the hot-water pipe 12 detected by the hot-water pipe detection sensors 110.

According to the self-propelled work robot 100 configured as described above, the operation mode of the robot arm 102 can be appropriately switched according to states of the hot-water pipes 12 detected by the hot-water pipe detection sensors 110. Accordingly, for example, by providing the hot-water pipe 12 in an area for which the operation mode of the robot arm 102 is desired to be switched, which is the work area R1 in this case, the operation mode of the robot arm 102 can be accurately switched to the operation permission mode and the operation restriction mode according to the area where the self-propelled work robot 100 is present.

According to the self-propelled work robot 100, the hot-water pipe 12, which is an example of the target, extends along the direction in which the robot main body 101 and eventually the entire self-propelled work robot 100 travels with the traveling unit 105. According to the configuration example, in an area where the hot-water pipe 12 extends, the hot-water pipe 12 can be continuously detected as the self-propelled work robot 100 travels, and it is possible to avoid occurrence of an event where the hot-water pipe 12 cannot be detected.

Therefore, by arranging the hot-water pipe 12 extending in the area for which the operation mode of robot arm 102 is desired to be switched to the operation permission mode, a state where the operation mode of the robot arm 102 is switched to the operation permission mode can be maintained in the area.

According to the self-propelled work robot 100, the robot main body 101 and eventually the entire self-propelled work robot 100 travels with the traveling unit 105, on the hot-water pipe 12 as the target. According to the configuration example, the hot-water pipe 12 as the target is immediately below the traveling self-propelled work robot 100. Therefore, the hot-water pipe 12 can be more easily detected.

The self-propelled work robot 100 includes the obstacle detection sensors 109 that detect an obstacle present around the robot main body 101, and the detection area switching unit 125 that switches the area in which the obstacle detection sensors 109 detect an obstacle. The detection area switching unit 125 switches the area to be detected by the obstacle detection sensors 109 according to states of the hot-water pipe 12 detected by the hot-water pipe detection sensors 110.

In a state where the hot-water pipe 12 is detected by the hot-water pipe detection sensors 110, it is highly possible that the self-propelled work robot 100 is present in the work area R1. Therefore, by switching the area in which the obstacle detection sensors 109 detect an obstacle to an area suitable for work time, in this case, the in-lane pattern Pb, for example, it is possible to prevent the cultivation facilities 11a or the support member 11b from being detected as an obstacle.

Meanwhile, in a state where the hot-water pipe 12 is not detected by the hot-water pipe detection sensors 110, it is highly possible that the self-propelled work robot 100 is present in an area other than the work areas R1. Therefore, by switching the area in which the obstacle detection sensors 109 detect an obstacle to an area suitable for non-work time, in this case, the out-of-lane pattern Pa, for example, it is possible to sense a person present in an area other than the work areas R1 as an obstacle, and thus to improve safety.

According to the self-propelled work robot 100, the robot arm 102 is able to be switched between at least the operation permission mode in which operation is permitted and the operation restriction mode in which the operation is restricted. The operation mode switching unit 124 switches the operation mode of the robot arm 102 from the operation restriction mode to the operation permission mode in a case where the hot-water pipe detection sensors 110 have detected the hot-water pipe 12.

In a state where the hot-water pipe 12 is detected by the hot-water pipe detection sensors 110, it is highly possible that the self-propelled work robot 100 is present in the work area R1. Therefore, by switching the operation mode of the robot arm 102 from the operation restriction mode to the operation permission mode, work by the robot arm 102 can be appropriately performed.

Meanwhile, in a state where the hot-water pipe 12 is not detected by the hot-water pipe detection sensors 110, it is highly possible that the self-propelled work robot 100 is present in an area other than the work areas R1. Therefore, it is possible to improve safety by switching the operation mode of the robot arm 102 from the operation permission mode to the operation restriction mode.

According to the self-propelled work robot 100, the hot-water pipe detection sensors 110 are provided at the front portion and rear portion of the robot main body 101 in the traveling direction.

According to the configuration example, on the basis that both the two front and rear hot-water pipe detection sensors 110 indicate the detected state, it is possible to accurately determine that the entire self-propelled work robot 100 is present on the hot-water pipes 12, that is, in the work area R1.

On the basis that the indication of either one of the two front and rear hot-water pipe detection sensors 110 changes from the detected state to the undetected state, it is possible to accurately determine that the entire or a part of the self-propelled work robot 100 is present out of the work areas R1.

By stopping the operation of the robot arm 102 on the basis that the indication of either one of the two front and rear hot-water pipe detection sensors 110 changes from the detected state to the undetected state, it is possible to prevent the robot arm 102 from operating outside of the work areas R1, and thus to further improve safety.

The self-propelled work robot 100 includes the form switching unit 126 that switches the form of the robot arm 102 according to states of the hot-water pipe 12 detected by the hot-water pipe detection sensors 110. The robot arm 102 is able to be switched between the detection time form set as the form to be taken or form recommended in a case where the hot-water pipe detection sensors 110 have detected the hot-water pipe 12, and the non-detection time form set as the form to be taken or form recommended in a case where the hot-water pipe detection sensors 110 have not detected the hot-water pipe 12. The form switching unit 126 switches the form of the robot arm 102 from the detection time form to the non-detection time form in a case where the hot-water pipe detection sensors 110 have not detected the hot-water pipe 12 and the robot arm 102 is switched to the detection time form.

In a state where the hot-water pipe 12 is not detected by the hot-water pipe detection sensors 110, it is highly possible that the self-propelled work robot 100 is present in an area other than the work areas R1. Therefore, by switching the form of the robot arm 102 from the detection time form to the non-detection time form, it is possible to improve safety.

According to the self-propelled work robot 100, in a case where the hot-water pipe detection sensors 110 have not detected the hot-water pipe 12 and the robot arm 102 is switched to the detection time form, the form switching unit 126 switches the form of the robot arm 102 from the detection time form to the non-detection time form, after the robot main body 101 causes the traveling unit 105 to travel until the hot-water pipe detection sensors 110 are ready to detect the hot-water pipe 12.

In a state where the hot-water pipe 12 is not detected by the hot-water pipe detection sensors 110, it is highly possible that the self-propelled work robot 100 is present in an area other than the work areas R1. Therefore, if the form of the robot arm 102 is switched in this state, the robot arm 102 may come into contact with a person. Meanwhile, in a state where the hot-water pipe 12 is detected by the hot-water pipe detection sensors 110, it is highly possible that the self-propelled work robot 100 is present in the work area R1, and it is less likely that a person is present in the work area R1.

Therefore, in a case where the hot-water pipe detection sensors 110 have not detected the hot-water pipe 12 and the robot arm 102 is switched to the detection time form, the form of the robot arm 102 may be switched after the robot main body 101 travels with the traveling unit 105 until the hot-water pipe detection sensor 110 are ready to detect the hot-water pipe 12, that is, after the self-propelled work robot 100 is moved into the work area R1. Accordingly, it is possible to prevent the robot arm 102 from coming into contact with a person at a time of transformation, and it is possible to improve safety.

The self-propelled work robot 100 includes the harvest tool 103 provided on the robot arm 102 and the disinfection unit 108 for disinfection of the harvest tool 103. Therefore, for example, a form in which the harvest tool 103 has moved into the disinfection unit 108 may be set as the non-detection time form.

According to the form for the harvest tool 103 moved into the disinfection unit 108, it is easier to prevent the harvest tool 103 from coming into contact with a person, and it is possible to further improve safety. The robot arm 102 is set to the non-detection time form mainly at the non-work time when the work by the robot arm 102 is not performed. Therefore, by adopting the form for the harvest tool 103 moved into the disinfection unit 108 as the non-detection time form, it is possible to disinfect the harvest tool 103 with the disinfection unit 108 during the non-work time, and thus efficiently perform disinfection work.

The self-propelled work robot 100 includes the camera 104 provided on the robot arm 102. Therefore, for example, a form in which the camera 104 has moved to a position where an image of the predetermined imaging target can be captured by the camera 104 may be set as the non-detection time form.

As described above, the robot arm 102 is set to the non-detection time form mainly in the non-work time when the work by the robot arm 102 is not performed, and the self-propelled work robot 100 is assumed to travel in an area other than the work areas R1 during the non-work time. Therefore, by adopting, as the non-detection time form, a form in which the camera 104 has moved to a position where an image of the predetermined imaging target object, which is the trace lines 13, the markers 14 and 15, or the like, for example, can be captured, it is possible to facilitate image capturing of the imaging target object when the self-propelled work robot 100 travels in the non-work time, and thus to easily support the self-propelled work robot 100 traveling in the non-work time.

According to the self-propelled work robot 100, traveling unit 105 is able to switch a rotational speed of the driving wheels 106, which move the robot main body 101 and eventually the entire self-propelled work robot 100, according to states of the hot-water pipe 12 detected by the hot-water pipe detection sensors 110.

As described above, if the driving wheels 106 are rotated at the same rotational speed between a case where the large wheel parts 106a are mainly used to travel in an area other than the work areas R1 and a case where the small wheel parts 106b are mainly used to travel on the hot-water pipes 12 in the work area R1, the moving speed of the self-propelled work robot 100 when traveling in an area other than the work areas R1 is relatively high, and the moving speed of the self-propelled work robot 100 when traveling in the work areas R1 is relatively low.

Therefore, by appropriately switching the rotational speed of the driving wheels 106 according to states of the hot-water pipe 12 detected by the hot-water pipe detection sensors 110, it is possible to prevent traveling speed of the self-propelled work robot 100 particularly in the work areas R1 from becoming excessively slow, and thus to reduce occurrence of an event where the work time is elongated.

Generally, in a case where the traveling speed of the driving wheels is increased, a moving distance per unit time becomes longer. Therefore, it is conceivable to expand an obstacle sensing area. However, according to the self-propelled work robot 100, an increase in rotational speed of the driving wheels 106 means an increase in rotational speed of the small wheel parts 106b, not the large wheel parts 106a. Therefore, the moving speed of the entire self-propelled work robot 100 is not increased so much.

Therefore, in the self-propelled work robot 100, if the area in which the obstacle detection sensors 109 detect an obstacle is expanded just because the rotational speed of the driving wheels 106 is increased, the obstacle detection sensor 109 may detect, for example, a wall or the like present at an end of the work area R1 as an obstacle, even if the self-propelled work robot 100 in the work area R1 is sufficiently away from the end of the work area R1. When the obstacle is detected, control for reducing the moving speed of the self-propelled work robot 100 or control for stopping the self-propelled work robot may be performed even in a state where the self-propelled work robot 100 reaches close to the end of the work area R1.

Therefore, the self-propelled work robot 100 is configured so that the area in which the obstacle detection sensors 109 detect an obstacle is switched to the in-lane pattern Pb in a case where the self-propelled work robot 100 is present in the work area R1. Therefore, even if the traveling speed of the self-propelled work robot 100 in the work area R1 is increased, the area in which the obstacle detection sensors 109 detect an obstacle can be set to an area that is not excessively wide and is suitable for traveling in the work area R1. Therefore, it is possible to prevent control for reducing the moving speed of the self-propelled work robot or control for stopping the self-propelled work robot 100 even if there is still a distance to the end of the work area R1.

The self-propelled work robot 100 includes the safety monitoring unit 123 that monitors whether a behavior of the entire self-propelled work robot 100 including at least the robot arm 102 and the traveling unit 105 is in a safe state. The safety monitoring unit 123 functions as a control unit that controls the behavior of the entire self-propelled work robot 100 including at least the robot arm 102 and the traveling unit 105. According to the configuration example, the work by and traveling of the self-propelled work robot 100 can be performed in a safe state on the basis of control by the control unit.

The safety monitoring unit 123 includes the control unit that has acquired a predetermined safety certification, by which it is possible to further guarantee safety. Various sensors such as the hot-water pipe detection sensors 110, the obstacle detection sensors 109, and the like also include a sensor that has acquired a predetermined safety certification, by which it is possible to further guarantee safety. Other components that constitute the self-propelled work robot 100 include a component that has acquired a predetermined safety certification, by which it is possible to further guarantee safety. As the safety certification, it is possible to adopt various safety certification standards including a standard stipulated by the International Organization for Standardization (ISO) and the like, for example.

The self-propelled work robot 100 includes the robot arm 102 capable of executing agricultural work, and may include a robot arm capable of executing work other than agricultural work.

### (Second embodiment)

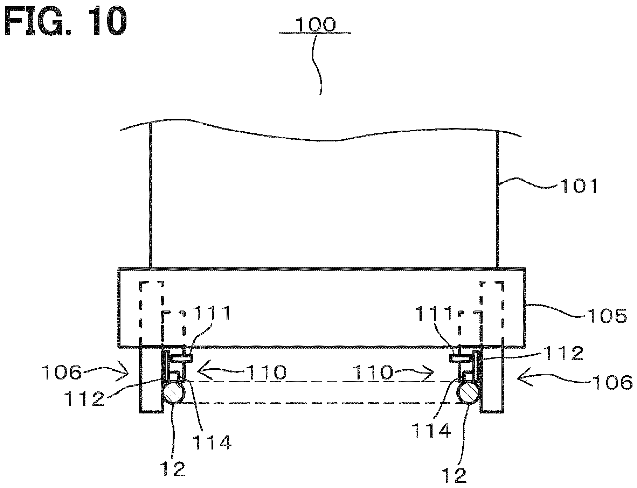

Because a hot-water pipe 12 provided in an agricultural field 10 is long, the hot-water pipe 12 may bend, and may be inclined entirely or partially. Therefore, as exemplified in FIG. 10, in the present embodiment, a self-propelled work robot 100 includes hot-water pipe detection sensors 110 on both sides in a shorter direction of the robot main body 101.

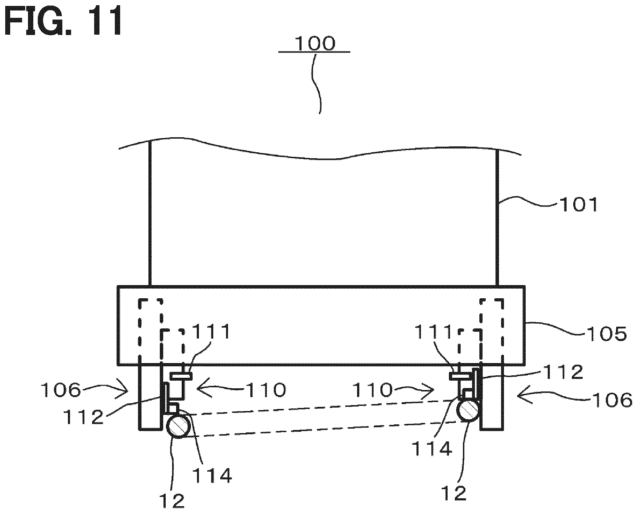

According to the configuration example, as exemplified in FIG. 11, in a state where the hot-water pipe 12 is inclined, at least either of the two hot-water pipe detection sensors 110 indicates a semi-detected state or a non-detected state. Therefore, it can be determined that the hot-water pipe 12 is inclined. Meanwhile, as exemplified in FIG. 10, in a state where hot-water pipe 12 is not inclined, both of the two hot-water pipe detection sensors 110 indicate a detected state. Therefore, it can be determined that the hot-water pipe 12 is not inclined.

As described above, according to an example of configuration according to the present embodiment, inclination of the hot-water pipe 12 or a width dimension of the hot-water pipe 12 in a horizontal direction can be detected by the two hot-water pipe detection sensors 110. The width dimension of hot-water pipe 12 can also be defined as a dimension in a direction orthogonal to a longitudinal direction of the hot-water pipe 12. The width dimension of hot-water pipe 12 in the horizontal direction may be narrowed or widened due to a factor such as inclination of the hot-water pipe 12, or aging or damage of the hot-water pipe 12, for example. In a case where a change in the inclination or width dimension of the hot-water pipe 12 is detected, a control device 120 may execute control to decrease traveling speed of the self-propelled work robot 100, stop the self-propelled work robot 100 from traveling, or make an error notification, for example. Accordingly, even if an event that may result in insufficient safety assurance occurs due to inclination of the hot-water pipe 12 or fluctuation of the width dimension, it is possible to prevent the self-propelled work robot 100 from continuing to travel in such a state, and to thus improve safety. The error notification may be notified with a display of an operation input unit included in the self-propelled work robot 100, with a warning lamp turned on or blinking, or with voice or sound via a speaker or the like, for example.

### (Other embodiments)

The present disclosure is not limited to the plurality of embodiments described above, and modifications and extensions can be made as appropriate without departing from the scope of the present disclosure. For example, a self-propelled work robot 100 can be configured by appropriately selecting and combining the above-described plurality of embodiments.

A target is not limited to a hot-water pipe 12, and for example, another element that can be detected by the self-propelled work robot 100 in an agricultural field 10 may be used as the target. The target may be, for example, a predetermined object provided at an entrance of a work area R1. In this case, it is sufficient if the self-propelled work robot 100 maintains, that is, latches, the detected state when detecting the predetermined object, and switches to a non-detected state, that is, an unlatched state when detecting the predetermined object again.

A target detection unit may be configured to detect the target not with a non-contact switch but with, for example, a contact switch, a switch by communication or a light beam, or the like, may be configured to detect the target by using RFID, or may be configured to detect the target with recognition of a code or the like by a camera 104. That is, various configurations can be applied as long as the target can be detected by using some method.

The target detection unit may be configured to detect the target while the self-propelled work robot 100 is traveling, or may be configured to detect the target while the self-propelled work robot 100 is stopped. The self-propelled work robot 100 may be configured to permit operation of a robot arm 102 even at a position other than a position where the target detection unit has detected the target, or may be configured to permit the operation of the robot arm 102 only at the position where the target detection unit has detected the target. The self-propelled work robot 100 may be configured to permit the operation of the robot arm 102 on condition that a sufficiently safe state is ensured by a safety monitoring unit 123, for example.

The number of target detection units mounted on one self-propelled work robot 100 is not limited to two, and may be one or a plurality of three or more. A position where each of the target detection units is disposed is not limited to a front portion or rear portion of the self-propelled work robot 100, and may be, for example, a left side portion, right side portion, upper portion, lower portion, or another portion of the self-propelled work robot 100.

The number of obstacle detection units mounted on one self-propelled work robot 100 is not limited to two, and may be one or a plurality of three or more. A position where each of the obstacle detection units is disposed is not limited to the front portion or rear portion of the self-propelled work robot 100, and may be, for example, the left side portion, right side portion, upper portion, lower portion, or another portion of the self-propelled work robot 100. The present disclosure can also be applied to a self-propelled work robot that performs work other than agricultural work.

Although the present disclosure has been described in accordance with the embodiments, it is understood that the present disclosure is not limited to the embodiments and structures. The present disclosure also includes various modifications and modifications within a range of equivalency. In addition, various combinations or forms and other combinations or forms including only one element, one or more elements, or one or less elements of those are also within the scope and idea of the present disclosure.

The control unit and the method thereof described in the present disclosure may be implemented by a dedicated computer provided by configuring a processor and memory programmed to execute one or a plurality of functions embodied by a computer program. Alternatively, the control unit and the method thereof described in the present disclosure may be realized by a dedicated computer provided by configuring a processor by one or more dedicated hardware logic circuits. Alternatively, the control unit and the method thereof described in the present disclosure may be implemented by one or more dedicated computers including a combination of a processor and memory programmed to execute one or more functions, and a processor including one or more hardware logic circuits. The computer program may be stored in a tangible, non-transitory computer-readable medium as an instruction executed by a computer.

The present disclosure further includes the following inventions in addition to the inventions described in the claims.

### [Claim 1]

A self-propelled work robot comprises: an operation unit (102) configured to operate in a plurality of operation modes; a robot main body (101) provided with the operation unit; a traveling unit (105) configured to cause the robot main body to travel; a target detection unit (110) configured to detect a predetermined target; and an operation mode switching unit (124) configured to switch among the operation modes of the operation unit according to a state of the target detected by the target detection unit.

### [Claim 2]

The self-propelled work robot is according to claim 1. The target extends along a direction in which the robot main body travels with the traveling unit.

### [Claim 3]

The self-propelled work robot is according to claim 1 or 2. The robot main body is configured to travel on the target with the traveling unit.

### [Claim 4]

The self-propelled work robot is according to any one of claims 1 to 3, further comprising: an obstacle detection unit (109) configured to detect an obstacle present around the robot main body; and a detection area switching unit (125) configured to switch a detection area in which the obstacle detection unit detects an obstacle. The detection area switching unit is configured to switch the detection area according to a state of the target detected by the target detection unit.

### [Claim 5]

The self-propelled work robot is according to any one of claims 1 to 4. The operation unit is configured to be switched between an operation permission mode in which operation is permitted and an operation restriction mode in which operation is restricted. The operation mode switching unit is configured to switch an operation mode of the operation unit from the operation restriction mode to the operation permission mode in a case where the target detection unit has detected the target.

### [Claim 6]

The self-propelled work robot is according to any one of claims 1 to 5. The target detection unit is provided at a front portion and a rear portion of the robot main body in a traveling direction.

### [Claim 7]

The self-propelled work robot is according to any one of claims 1 to 6, further comprising: a form switching unit (126) configured to switch a form of the operation unit according to the state of the target detected by the target detection unit. The operation unit is configured switch between a detection time form, which is set as a form to be taken in a case where the target detection unit has detected the target, and a non-detection time form, which is set as a form to be taken in a case where the target detection unit has not detected the target. In a case where the target detection unit has not detected the target and where the operation unit is switched to the detection time form, the form switching unit is configured to switch the form of the operation unit from the detection time form to the non-detection time form.

### [Claim 8]

The self-propelled work robot is according to claim 7. In a case where the target detection unit has not detected the target and where the operation unit is switched to the detection time form, the form switching unit is configured to switch the form of the operation unit from the detection time form to the non-detection time form, after the traveling unit causes the robot main body to travel until the target detection unit is ready to detect the target.

### [Claim 9]

The self-propelled work robot is according to claim 7 or 8, further comprising: a work unit (103) provided to the operation unit and configured to perform a predetermined work; and a disinfection unit (108) configured to disinfect the work unit. The non-detection time form is a form in which the work unit has moved into the disinfection unit.

### [Claim 10]

The self-propelled work robot is according to claim 7 or 8, further comprising: an imaging unit (104) provided to the operation unit. The non-detection time form is a form in which the imaging unit has moved to a position where the imaging unit is enabled to capture an image of a predetermined imaging target.

### [Claim 11]

The self-propelled work robot is according to any one of claims 1 to 10. The traveling unit is configured to switch rotational speed of a wheel that is to move the robot main body, according to a state of the target detected by the target detection unit.

### [Claim 12]

The self-propelled work robot is according to any one of claims 1 to 11, further comprising: a safety monitoring unit (123) configured to monitor whether behaviors of the operation unit and the traveling unit are in a safe state.

### [Claim 13]

The self-propelled work robot is according to claim 12. The safety monitoring unit is configured to serve as a control unit to control the behaviors of the operation unit and the traveling unit.

### [Claim 14]

The self-propelled work robot is according to claim 12 or 13. The safety monitoring unit is a control unit that has acquired a predetermined safety certification.

### [Claim 15]

The self-propelled work robot is according to any one of claims 1 to 14. The operation unit is configured to perform agricultural work.

### [Claim 16]

The self-propelled work robot is according to any one of claims 1 to 15.

The target detection unit is a sensor that has acquired a predetermined safety certification.

### [Claim 17]

The self-propelled work robot is according to any one of claims 1 to 16. The target detection unit is configured to detect an inclination or width of the target.

## Claims

1. A self-propelled work robot comprising:
an operation unit (102) configured to operate in a plurality of operation modes;
a robot main body (101) provided with the operation unit;
a traveling unit (105) configured to cause the robot main body to travel;
a target detection unit (110) configured to detect a predetermined target; and
an operation mode switching unit (124) configured to switch among the operation modes of the operation unit according to a state of the target detected by the target detection unit.

2. The self-propelled work robot according to claim 1, wherein
the target extends along a direction in which the robot main body travels with the traveling unit.

3. The self-propelled work robot according to claim 1, wherein
the robot main body is configured to travel on the target with the traveling unit.

4. The self-propelled work robot according to claim 1, further comprising:
an obstacle detection unit (109) configured to detect an obstacle present around the robot main body; and
a detection area switching unit (125) configured to switch a detection area in which the obstacle detection unit detects an obstacle, wherein
the detection area switching unit is configured to switch the detection area according to a state of the target detected by the target detection unit.

5. The self-propelled work robot according to claim 1, wherein
the operation unit is configured to be switched between an operation permission mode in which operation is permitted and an operation restriction mode in which operation is restricted, and
the operation mode switching unit is configured to switch an operation mode of the operation unit from the operation restriction mode to the operation permission mode in a case where the target detection unit has detected the target.

6. The self-propelled work robot according to claim 1, wherein
the target detection unit is provided at a front portion and a rear portion of the robot main body in a traveling direction.

7. The self-propelled work robot according to claim 1, further comprising:
a form switching unit (126) configured to switch a form of the operation unit according to the state of the target detected by the target detection unit, wherein
the operation unit is configured switch between
a detection time form, which is set as a form to be taken in a case where the target detection unit has detected the target, and
a non-detection time form, which is set as a form to be taken in a case where the target detection unit has not detected the target, and
in a case where the target detection unit has not detected the target and where the operation unit is switched to the detection time form, the form switching unit is configured to switch the form of the operation unit from the detection time form to the non-detection time form.

8. The self-propelled work robot according to claim 7, wherein
in a case where the target detection unit has not detected the target and where the operation unit is switched to the detection time form, the form switching unit is configured to switch the form of the operation unit from the detection time form to the non-detection time form, after the traveling unit causes the robot main body to travel until the target detection unit is ready to detect the target.

9. The self-propelled work robot according to claim 7, further comprising:
a work unit (103) provided to the operation unit and configured to perform a predetermined work; and
a disinfection unit (108) configured to disinfect the work unit, wherein
the non-detection time form is a form in which the work unit has moved into the disinfection unit.

10. The self-propelled work robot according to claim 7, further comprising:
an imaging unit (104) provided to the operation unit, wherein
the non-detection time form is a form in which the imaging unit has moved to a position where the imaging unit is enabled to capture an image of a predetermined imaging target.

11. The self-propelled work robot according to claim 1, wherein
the traveling unit is configured to switch rotational speed of a wheel that is to move the robot main body, according to a state of the target detected by the target detection unit.

12. The self-propelled work robot according to claim 1, further comprising:
a safety monitoring unit (123) configured to monitor whether behaviors of the operation unit and the traveling unit are in a safe state.

13. The self-propelled work robot according to claim 12, wherein
the safety monitoring unit is configured to serve as a control unit to control the behaviors of the operation unit and the traveling unit.

14. The self-propelled work robot according to claim 12, wherein
the safety monitoring unit is a control unit that has acquired a predetermined safety certification.

15. The self-propelled work robot according to claim 1, wherein
the operation unit is configured to perform agricultural work.

16. The self-propelled work robot according to claim 1, wherein
the target detection unit is a sensor that has acquired a predetermined safety certification.

17. The self-propelled work robot according to claim 1, wherein
the target detection unit is configured to detect an inclination or width of the target.
